# EUROPEAN PATENT APPLICATION

(11) **EP 3 176 916 A1**
(43) Date of publication of application: **07.06.2017**
(21) Application number: 15198030.7
(22) Date of filing: 04.12.2015
(51) Int. Cl.: H02K 3/50, H02K 3/40, H02K 15/06

(54) **STATOR WINDING AND A METHOD FOR MANUFACTURING A STATOR WINDING**

(71) Applicant: ABB Technology AG, 8050 Zürich (CH)
(72) Inventor: Ho, Chau-Hon, 79540 Lörrach (DE); Zant, Nikolaus, Raleigh, North Carolina 27604 (US); Zhao, Su, 72356 Västerås (SE); Paulsson, Goran, 72591 Västerås (SE); Salinas, Ener, 72210 Västerås (SE); Manolas, Iakovos, 72344 Västerås (SE); Svechkarenko, Dmitry, 17265 Sundbyberg (SE)
(74) Representative: ABB Patent Attorneys

(57) **Abstract**

The purpose of the invention is a stator winding for an electric rotating machine, in particular an high voltage electric rotating machine comprising insulated straight conductors and two end caps, which end caps each comprise a connector for every straight conductor, wherein the straight conductors are connectable to the end caps via the connectors of the respective end cap, and wherein the connectors of each end cap are connected to each other via embedded connections so that when connecting the straight connectors and both end caps, particular straight connectors are connected in serial, resulting in a desired stator winding pattern.

## Description

### TECHNICAL FIELD

The invention relates to the field of electric machines, and in particular to a stator winding for an electric rotating machine and a method for manufacturing such a stator winding.

### BACKGROUND OF THE INVENTION

Electric rotating machines, in particular synchronous and asynchronous high voltage electric rotating machines such as but not limited to turbo generators, hydro generators or high power motors with the stator voltage larger or equal than 1 kilovolt, in particular larger or equal than 3 kilovolt, more particular larger or equal than 6 kilovolt comprise a stator and a rotor.

A turbo generator typically has a bore diameter of 1 to 3 meters and a power of 100 to 500 Mega Watt

A hydro generator typically has a bore diameter of 2 to 6 meters and a power of 20 to 300 Mega Watt.

A high power motor typically has a diameter of 1 to 3 meters and a power of 10 to 100 Mega Watt.

The stator comprises a stator core, stator windings, and a stator frame. The stator core comprises slots. The stator windings are arranged adjacent to the stator core in the slots. They induce a magnetic field in the stator core (motor operation mode) or receive an induced current due to change in the magnetic field (generator operation mode).

The current design and assembly concept of high voltage electrical machines have been established for many decades and it is largely optimized within its limitations.

The so-called form wound coils, often with a diamond shape, is the most common concept used for manufacturing of stator windings for high voltage electric rotating machines today. The first step is to manufacture a flat loop by winding insulated copper strands, then taping the flat loop on specific sections to keep the strands aligned and to avoid offsets and pressing it for mechanical consolidation. The second step is to spread the flat loop into a form wound coil. The third step is to tape the main insulation mica tape as well as possibly other tapes such as but not limited to slot corona protection tapes, end corona protection tapes and surface tapes, either with an automatic taping robot or by manual taping onto the coil. The fourth step is to insert and mechanically fix the coil in a stator slot, usually using also so-called wedges. The previous steps are repeated for every coil. The fifth step is to braze the end connections together when all coils are place in their respective stator slots. The sixth step is to mechanically fix the end windings by bracing with ropes. The seventh step is to impregnate the stator with a global vacuum pressure impregnation where the entire stator is put into a tank of resin. The eight step is to cure the stator impregnated with liquid resin in an oven.

Alternatively to the above descripted global vacuum pressure impregnation (GVPI), there is also the possibility to impregnate and cure every coil separately before placing the coils into the slots. This alternative method is referred to a single vacuum pressure impregnation (Single VPI) or Resin Rich Technology.

However, the rather complex geometry (diamond-shaped) of the coils leaves very limited space for the optimization of the production methodology on how to apply the required insulation as well as for the selection of the insulation material. Therefore, there is only a very limited potential for improvements within the form wound coil concept.

The manufacturing is time-consuming, requires multiple steps, and allows only for a relatively low degree of automation. Furthermore, since only low viscosity resins are applicable for the impregnation, there is a restriction to use only thermosets, usually epoxy-anhydride and polyester resin systems. Due to the impregnation process, air bubbles in the resin lead to partial discharge. Dealing with these thermoset resins in the workshops causes health and safety as well as environmental issues due to evaporating chemical gases. Curing the impregnated parts is time (numerous hours) and energy consuming (heating of large ovens) while also creating chemical fumes that have to be eliminated.

### BRIEF SUMMARY OF THE INVENTION

It is an objective of the invention to provide a stator winding for an electric rotating machine and a method of manufacturing a stator winding for an electric rotating machine which is easier to manufacture and which ables the implementation of insulation materials with longer life time and reduced partial discharge.

According to the invention, the stator winding comprises three main elements, a number of straight conductors and two end caps. The straight conductors are insulated. Due to the simple geometry of the straight conductors, it is possible to use easier ways of applying the insulation and different materials for the insulation such as but not limited to an extrusion of a high temperature thermoplast. The end caps connect the respective insulated straight conductors in such a way that the desired winding pattern is formed. The connection of the insulated straight conductors to each other is done in two steps. Firstly, each end cap comprises connectors which connect the insulated straight conductors to the end cap. Secondly, respective connectors are connected to each other via embedded connections. Due to the separation of the winding into the three main elements, it is possible to parallelize work and to allow the assembly of pre-manufactured modules.

According to a first preferred embodiment of the invention, the insulation of the straight conductors comprises an inorganic filler like for example a mica filler. Thus, it is possible increase the resistance for partial discharge without the need of taping and the easier combination with the insulation base material.

### BRIEF DESCRIPTION OF THE DRAWINGS

The subject matter of the invention will be explained in more detail in the following paragraph with reference to preferred exemplary embodiments which are illustrated in the attached drawings, which schematically show:
- Figure 1: a perspective view of a stator core with slots and insulated straight conductors placed in the slots according to the invention;
- Figure 2: a frontal view of an end cap according to the invention;
- Figure 3: a side view of the end cap according to the invention;
- Figure 4: a perspective view of an assembly of a stator core with slots and insulated straight conductors and an end cap according to the invention;
- Figure 5: a perspective view of a connection of a connector and a straight conductor according to the invention; and
- Figure 6: a perspective view of two connectors and an embedded connection according to the invention;

The reference symbols used in the drawings, and their meanings, are listed in summary form in the list of designations. In principle, identical parts are provided with the same reference symbols in the figures.

### DETAILED DESCRIPTION OF THE INVENTION

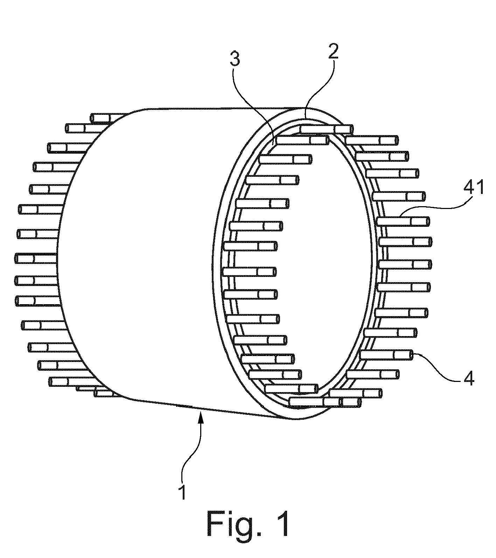

Fig. 1 shows a perspective view of a stator core 2 with slots 3 and insulated straight conductors 4 placed in the slots 3 according to the invention. The straight conductors 4 are either metal wires, strands, or bars, in particular Roebel bar. The insulation 41 of the straight conductors 4 is made of a high temperature thermoplast and is applied to the straight conductors 4 via an extrusion process. The stator core 2 is made of a stack of metal sheets. The cutting out of the metal sheets and the cutting out of the slots 3 can be done in the same process step. In the present case, the slots 3 have a closed shape. Alternatively, the slots can also have an open or half closed shape. In case of the closed shape or half closed shape of the slots 3, it is necessary to insert the insulated straight conductors 4 in axial direction into the slots 3 of the stator core.

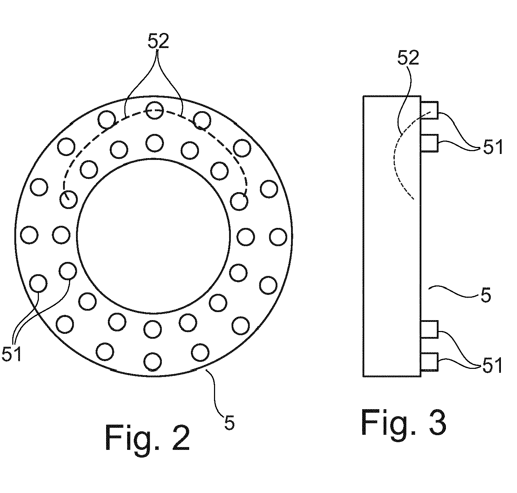

Fig. 2 and 3 show a frontal view and a side view of an end cap 5 according to the invention. The connectors 51 are arranged on a side of end cap 5 facing in axial direction. The position of one connector 51 corresponds to the position of one straight conductor 4 when inserted into the respective slot 3 of the stator core 2. In the example shown in Fig. 2 and 3, the end cap 5 corresponds to double-layer winding with a first set of connectors 51 distributed on a circle with a smaller diameter and a second set of connectors 51 distributed on the circle with a larger diameter than the circle of the first set of connectors 51. Specific connectors are connected to each other via embedded connections 52 in order to form the desired winding pattern when the straight conductors 4 and two end caps 5 are connected to each other.

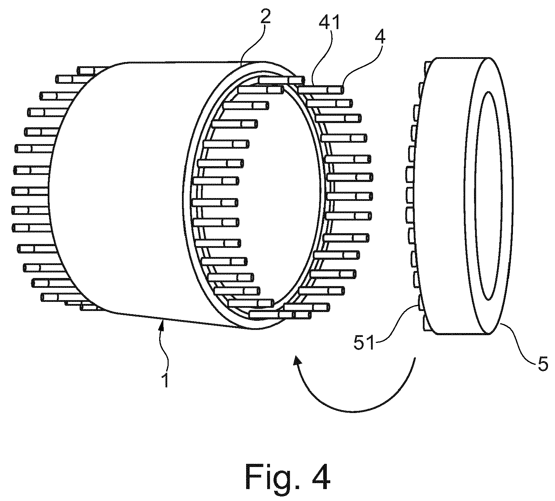

Fig. 4 shows a perspective view of an assembly of a stator core 2 with slots 3 and insulated straight conductors 4 and an end cap 5 according to the invention. The stator core 2 has one straight conductor 4 per slot 5 (single-layer winding). Therefore, the corresponding end cap 5 has only one set of connectors 51 distributed on a circle with a diameter that corresponds to the circle in which the slots are arranged. When assembling the stator core 2 with the straight conductors 4 together with the end cap 5 via an axial moving the end cap 5 on the stator core 2 while the end cap5, each connector 51 of the end cap 5 will connect to an end of the straight connector 4 that is facing the end cap 5.

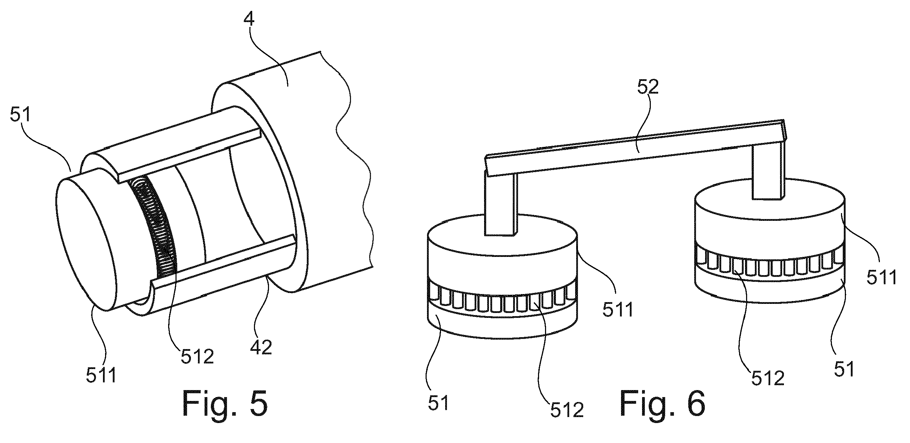

Fig. 5 shows a perspective view of a connection of a connector 51 and a straight conductor 4 according to the invention. The connector 51 comprises a socket 511 in the form of a circular cylinder and a spiral spring 512. The socket 511 comprises a circumferential notch on the lateral surface. The ends of the spiral spring 512 are connected to each other forming a torus. The straight conductor 4 comprises a hollow circular cylinder 42 at a connector-facing end of the straight conductor 4. In a state of no deformation, the spiral spring 512 has an inner diameter which is smaller than the outer diameter of the socket 511 in order to ensure a firm contact between the socket 511 and the spiral spring 512 when the spiral spring 512 is positioned in the notch of the socket 511. For the connection of the connector 51 and the straight conductor 4, both parts are arranged concentrically and then pushed together so that there is an overlapping of the socket 511 and the hollow cylinder 42. Furthermore, the notch with the spiral spring 512 needs to be within the overlapping area. In a state of no deformation, the spiral spring 512 has an outer diameter which is larger than the inner diameter of the hollow cylinder 42 in order to ensure a firm contact between the hollow cylinder 42 and the spiral spring 512 when the connector 5 and a straight conductor 4 are connected. Alternatively, it is also possible to use brazing or welding to establish a contact between a connector to a straight conductor.

Fig. 6 shows a perspective view of two connectors 51 and an embedded connection 52 according to the invention. The embedded connection 52 is conductive and attached to the back-ends of the two connectors 51. The form of the embedded connection 52 needs to ensure that there is no collision with other embedded connections similar to the geometric constraints of winding heads in state of the art.

### LIST OF REFERENCE NUMERALS

- 1: stator
- 2: stator core
- 3: slots
- 4: insulated straight conductors
- 41: insulation of straight conductors
- 42: hollow cylinder
- 5: end caps
- 51: connector
- 511: cylinder
- 512: spiral spring
- 52: embedded connections

## Claims

1. Stator winding for an electric rotating machine, in particular an high voltage electric rotating machine comprising
insulated straight conductors and
two end caps, which end caps each comprise a connector for every straight conductor, wherein
the straight conductors are connectable to the end caps via the connectors of the respective end cap, and wherein
the connectors of each end cap are connected to each other via embedded connections so that when connecting the straight connectors and both end caps, particular straight connectors are connected in serial, resulting in a desired stator winding pattern.

2. Stator winding according to claim 1 wherein the insulation of the straight conductors comprises polymeric material, in particular thermoplast material, more particular a high temperature engineering plastic such as but not limited to polysulfone (PSU).

3. Stator winding according to claim 1 or 2, wherein the insulation of the straight conductors comprises an inorganic filler such as but not limited to a mica filler.

4. Stator winding according to one of the claims 1 to 3, wherein the straight conductors comprise an inner semi-conductive layer between a conductor base material and the insulation of the straight conductors and/or an outer semi-conductive layer around the insulation of the conductors, wherein in both cases the semi-conductive layer comprises additionally a conductive filler such as but not limited to black carbon, preferable using the same material as the insulation of the straight conductors.

5. Stator winding according to one of the claims 4, wherein the end caps comprise a casted elastomer such as but not limited to silicone or a casted thermoset such as but not limited to epoxy or polyurethane.

6. Stator winding according to claim 5, wherein the cast material comprises an additive to improve the thermal conductivity.

7. Stator winding according to one of the claims 6, wherein the connectors comprise a socket and a conductive spiral spring.

8. Stator winding according to one of the claims 7, wherein the embedded connections comprise U-shape copper pieces, preferably made of multiple litz wire.

9. Stator for an electric rotating machine comprising a stator core and a stator winding according to one of the claims 1 to 8, wherein the stator core comprises slots for holding the stator winding and wherein the slots have an open, semi-open or closed shape.

10. Electric rotating machine with the stator according to claim 9.

11. Method of manufacturing a stator winding for an electric rotating machine:
a) Supply straight conductors;
b) Insulate the straight conductors using extrusion, exjection, molding, or taping;
e) Supply two pre-manufactured end caps with connectors and embedded connections.

12. Method of manufacturing a stator winding according to claim 11, wherein step b) comprises
insulating the straight conductors using three single-screw extruders leading to one extrusion dye or using a co-extrusion of three layers.

13. Method of manufacturing a stator winding according to claim 11 or 12, wherein step e) comprises supplying the end caps comprises casting of an elastomer or a thermoset.

14. Method of manufacturing a stator for an electric rotating machine:
a) Supply straight conductors;
b) Insulate the straight conductors using extrusion, exjection, molding, or taping;
c) Supply a stator core with slots;
d) Place the straight conductors in the slots;
e) Supply two pre-manufactured end caps with a connectors for every straight conductor and embedded connections connecting the connectors; and
f) Assemble the stator core with the straight connectors and the end caps by connecting the straight conductors to the connectors of the end caps;

15. Method of manufacturing a stator according to claim 14, wherein step d) comprises
axially inserting the straight conductors into the slots having a semi-open or closed shape.
